# EUROPÄISCHE PATENTSCHRIFT

(11) **EP 3 983 146 B1**
(45) Veröffentlichungstag und Bekanntmachung des Hinweises auf die Patenterteilung: **12.07.2023**
(21) Anmeldenummer: 20715855.1
(22) Anmeldetag: 30.03.2020
(51) Int. Cl.: B21C 47/24

(54) **FIXIEREN EINES BANDENDABSCHNITTS EINES METALLBANDCOILS AN EINER BENACHBARTEN BANDWICKLUNG**
FIXING A STRIP END SEGMENT OF A METAL STRIP COIL TO AN ADJACENT STRIP WINDING
FIXATION DE L'EXTRÉMITÉ DE LA BANDE, D'UNE BOBINE MÉTALLIQUE, SUR UNE SPIRE ADJACENTE

(30) Priorität: 13.06.2019 DE 102019208607; 16.01.2020 DE 102020200472
(43) Veröffentlichungstag der Anmeldung: 20.04.2022
(73) Patentinhaber: SMS group GmbH, 40237 Düsseldorf (DE)
(72) Erfinder: KREX, Andreas, 57080 Siegen (DE); FICK, Guido, 57223 Kreuztal (DE); BÖCKING, Sebastian, 57072 Siegen (DE)
(74) Vertreter: Kross, Ulrich
(86) Internationale Anmeldenummer: PCT/EP2020/058955
(87) Internationale Veröffentlichungsnummer: WO 2020/249284

(56) Entgegenhaltungen:
- EP-A1- 2 426 055
- EP-A1- 2 982 452
- EP-A2- 0 893 189
- WO-A1-2014/033037
- JP-A- H02 235 580
- JP-A- H05 269 526
- JP-A- H07 132 384
- US-A1- 2015 121 678

## Beschreibung

Die Erfindung betrifft ein Verfahren zum Fixieren eines Bandendabschnitts eines zu einem Coil aufgewickelten Metallbands an einer benachbart zu dem Bandendabschnitt angeordneten Bandwicklung des Coils. Des Weiteren betrifft die Erfindung eine Vorrichtung zum Fixieren eines Bandendabschnitts eines zu einem Coil aufgewickelten Metallbands an einer benachbart zu dem Bandendabschnitt angeordneten Bandwicklung des Coils.

Ein Endprodukt einer Walzstraße ist ein Metallbandcoil, im Folgenden einfach Coil genannt, das durch Aufwickeln eines gewalzten Metallbands auf einem Haspeldorn einer Wickelvorrichtung hergestellt wird. Das Coil wird nach dem Aufwickelvorgang von dem Haspeldorn abgezogen. In weiteren Prozessschritten wird es wieder auf einen Haspeldorn einer weiteren Wickeleinrichtung geschoben und anschließend abgewickelt.

Der in einem radial innen liegenden inneren Coilauge angeordnete Bandendabschnitts des zu dem Coil mit dem inneren Coilauge aufgewickelten Metallbands neigt dazu, zusammenzufallen bzw. zu kollabieren. Daher muss dieser Bandendabschnitt fixiert werden, damit das Coil bei folgenden Verarbeitungsprozessen sicher auf den Haspeldorn einer weiteren Wickelvorrichtung geschoben werden kann.

Bekannt ist es, den in dem inneren Coilauge liegenden Bandendabschnitt manuell mit einer benachbart zu dem Bandendabschnitt angeordneten Bandwicklung des Coils zu verschweißen, um den Bandendabschnitt zu fixieren. Dieses manuelle Verschweißen ist jedoch mit einer geringen Arbeitssicherheit und Personensicherheit verbunden, da die Schweißarbeiten an einem Coil vorgenommen werden, das üblicherweise eine Temperatur von etwa 400 °C aufweist. Zudem ist das Verschweißen recht zeitintensiv, was mit hohen Personalkosten einhergeht. Ferner ist das manuelle Verschweißen üblicherweise mit einem hohen Verbrauch von Verbrauchsmitteln, wie einem Schweißdraht, einem Schweißgas, einem Schutzgas oder dergleichen, verbunden.

Des Weiteren ist es bekannt, den am Coilaußenumfang liegenden Bandendabschnitt mittels einer Bundbindebandmaschine an dem übrigen Coil zu fixieren. Auch dies geht mit einem hohen Verbrauch von Verbrauchsmitteln in Form von Bindebändern einher. Diese Fixierung wird benötigt, da die Außenwindung(en) aufgrund der Eigenspannung zum Auffedern neigen und so die weitere Handhabung des Coils erschweren.

Aus EP 2 982 452 A1 ist ein Verfahren zur Herstellung eines Coils aus metallischem Band bekannt, bei dem das Band auf einem spreizbaren Haspeldorn aufgewickelt und das fertig gewickelte Coil auf einem Bundwagen abgesetzt und vom Haspeldorn abtransportiert wird. Das Verfahren umfasst ein Aufwickeln des Bandes auf den gespreizten Haspeldorn, ein Aufnehmen des fertig gewickelten Coils auf dem Bundwagen, ein Entspreizen des Haspeldorns und ein Herausfahren des Coils vom Haspeldorn durch eine Relativbewegung zwischen Haspeldorn und Bundwagen in Richtung der Achse des Haspeldorns, wobei eine solche Verfahrbewegung erfolgt, so dass das axiale Ende des Haspeldorns von der Stirnseite des Coils im Coilauge liegend um einen vorgegebenen Betrag entfernt ist, wobei der vorgegebene Betrag kleiner ist als die Breite des Coils. Ferner umfasst das Verfahren ein Spreizen des Haspeldorns, ein Setzen einer Fixierung zwischen mindestens zwei übereinander liegenden Bandteilen des Bandes in dem Bereich des Coilauges, aus dem der Haspeldorn entfernt wurde, und ein Entspreizen des Haspeldorns und ein vollständiges Herausfahren des Coils vom Haspeldorn durch eine Relativbewegung zwischen Haspeldorn und Bundwagen in Richtung der Achse des Haspeldorns. Das Setzen der Fixierung kann eine Verbindung zwischen mindestens zwei übereinander liegenden Bandteilen per Stoffschluss erzeugen, insbesondere durch elektrische oder autogene Punktverschweißung.

JP H02 235 580 A (Basis für den Oberbegriff der unabhängigen Ansprüchen 1 und 9) und JP H05 269 526 A offenbaren jeweils ein Verfahren zum Fixieren eines in einem inneren Coilauge liegenden Bandendabschnitts eines zu einem Coil mit dem Coilauge aufgewickelten Metallbands an einer benachbart zu dem Bandendabschnitt angeordneten Bandwicklung des Coils unter Verwendung eines thermischen Schweißverfahrens.

Eine Aufgabe der Erfindung ist es, eine Sicherung der Bandendabschnitte an dem Coil einfacher und mit verbesserter Prozesssicherheit zu ermöglichen, ohne gleichzeitige Qualitätseinbußen.

Diese Aufgabe wird durch die unabhängigen Patentansprüche gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Verfahrens können dabei Ausgestaltungen der Vorrichtung entsprechen, und umgekehrt, selbst wenn im Folgenden hierauf im Einzelfall nicht explizit hingewiesen wird.

Gemäß dem im Anspruch 1 definierten erfindungsgemäßen Verfahren zum Fixieren eines Bandendabschnitts eines zu einem Coil aufgewickelten Metallbands an einer benachbart zu dem Bandendabschnitt angeordneten Bandwicklung des Coils wird der Bandendabschnitt durch ein Reibschweißverfahren stoffschlüssig an der Bandwicklung fixiert. Bei dem verwendeten Reibschweißverfahren kann es sich um ein Reibrührschweißverfahren oder bevorzugt um ein Reibpunktschweißverfahren handeln.

Erfindungsgemäß wird der Bandendabschnitt des zu dem Coil mit dem Coilauge aufgewickelten Metallbands ohne einen herkömmlich gegebenen äußeren Eintrag von thermischer Energie mit der benachbart zu dem Bandendabschnitt angeordneten Bandwicklung des Coils stoffschlüssig fixiert bzw. verschweißt. Dies verhindert das Auftreten von Schmelzschweißprozessen und somit eine Änderung von Materialeigenschaften des Metallbands durch das Verschweißen, so dass insgesamt ein Metallband mit höherer Qualität bereitgestellt werden kann. Zudem können mit der Erfindung zuverlässig Markierungen beispielsweise an Walzen bei nachfolgenden Prozessschritten vermieden werden, die beim Bearbeiten des Metallbands durch aufgehärtete Materialstreifen des Bandendabschnitts bzw. der benachbart dazu angeordneten Bandwicklung entstehen würden, die durch ein thermisches Schweißverfahren mit oder ohne Zusatzwerkstoff erzeugt werden würden. Auch wird durch die Erfindung ein dabei entstehender Schrott nicht durch Schweißzusätze verunreinigt. Das erfindungsgemäße Fügeverfahren kommt ohne die Verwendung eines Schweißzusatzwerkstoffs aus, der in einem weiteren Prozess die Walzen einer Kaltwalzanlage beschädigen könnte. Zudem ermöglicht das erfindungsgemäße Verfahren ein gezieltes Verbinden von lediglich zwei Bandlagen. Ferner ist bei dem erfindungsgemäßen Verfahren kein Stromdurchgang aufgrund von Erdungsströmen durch das gewickelte Metallband gegeben.

Der Bandendabschnitt kann in dem inneren Coilauge, das als radial innen und koaxial angeordnete axiale Durchgangöffnung des Coils ausgebildet ist, oder radial außen an dem Coil am Außendurchmesser angeordnet sein. Es können auch beide in Bandlängsrichtung gegebene Bandendabschnitte des Metallbands mittels des erfindungsgemäßen Verfahrens fixiert werden.

Aus Gründen der Einfachheit wird im Folgenden die Erfindung mit Blick auf das Fixieren des inneren Bandendabschnittes beschrieben, da dies die komplexe Aufgabenstellung darstellt. Die Übertragung der Wirkweise auf den äußeren Bandendabschnitt ist ohne Einschränkung mit enthalten.

Mittels des bevorzugten Reibpunktschweißverfahrens kann ein einziger Schweißpunkt ausgebildet werden oder es werden wenigstens zwei Schweißpunkte ausgebildet, die beispielsweise bezüglich einer Bandbreite des Metallbands in einer Reihe zueinander angeordnet sein können. Es können auch zwei oder mehrere solcher Schweißpunktreihen hergestellt werden, die parallel zueinander ausgerichtet sein können.

Mittels des verwendeten Reibrührschweißverfahrens kann eine einzelne kurze Schweißnaht ausgebildet werden oder es werden wenigstens zwei Schweißnähte, die beispielsweise bezüglich der Bandbreite des Metallbandes in einer Reihe hintereinander angeordnet sein können, ausgebildet.

Das erfindungsgemäße Verfahren eignet sich insbesondere für Coils aus gewalztem Aluminiumband, kann aber auch bei anderweitig ausgebildeten Metallbändern, insbesondere Dünnbändern, mit einer Banddicke von bis zu etwa 12 mm eingesetzt werden. Das Metallband kann ein Warmband oder ein Kaltband sein. Das Metallband kann alternativ zu einem Aluminiumband beispielsweise ein Stahlband, ein Kupferband oder ein Metallband aus einem anderen Nichteisenmetall sein. Das Aluminiumband kann ein Warmband mit einer Temperatur von beispielsweise bis zu 400 °C sein. Prozessparameter des erfindungsgemäßen Verfahrens können derart eingestellt werden, dass nur der Bandendabschnitt mit der benachbart dazu angeordneten Bandwicklung verschweißt wird, also ohne dass diese Bandwicklung mit einer weiteren radial außen dazu angeordneten Bandwicklung verschweißt wird.

Das erfindungsgemäße Verfahren eignet sich für anschließende Wärmebehandlungsschritte an dem Coil, da Bandmaterialien mit gleichen physikalischen Eckdaten ohne Fremdmaterial oder Zusatzmaterial miteinander verbunden werden. Hierdurch gewährleistet die Erfindung einen sortenreinen Materialum lauf.

Zur Durchführung des erfindungsgemäßen Verfahrens kann das Coil zunächst vollständig von einem Haspeldorn einer Wickelvorrichtung abgezogen und auf einer Ablage abgelegt werden. Die Ablage kann das Coil statisch aufnehmen oder derart ausgebildet sein, dass die Position des Coils verändert werden kann. Um hierbei die Verlagerung des Coils mitsamt der Ablage zu erleichtern, kann die Ablage angetrieben sein. Anschließend kann ein Reibschweißgerät vor dem Coil angeordnet und verwendet werden, um das Reibschweißen durchführen zu können. Nach Abschluss des Reibschweißens kann das Reibschweißgerät wieder entfernt und das Coil, beispielsweise mittels der Ablage, zu seinem nächsten Verarbeitungsort transportiert werden. Das erfindungsgemäße Verfahren wird somit außerhalb des Haspels durchgeführt, so dass keine Erhöhung von Nebenzeiten auftritt und Arbeiten in sicherheitsrelevanten Anlagenteilen vermieden werden.

Gemäß einer vorteilhaften Ausgestaltung wird das Reibschweißverfahren mittels eines Schweißroboters durchgeführt. Hierdurch wird das Verschweißen automatisiert, was Personalkosten einspart, die Anlagensicherheit und Personensicherheit aufgrund des Wegfalls manueller Schweißarbeiten an warmen Coils erhöht und aufgrund der höheren Genauigkeit der Automatisierung mit einer Reduzierung von Verbrauchsmitteln verbunden ist. Der Schweißroboter kann wenigstens ein Reibschweißgerät und wenigstens einen das Reibschweißgerät haltenden, angetriebenen Roboterarm aufweisen. Der Schweißroboter kann eine Drehfunktion für das Reibschweißgerät bereitstellen, um das Reibschweißgerät kraftreduziert in das innere Coilauge des Coils einfahren zu können, beziehungsweise an den Coilaußendurchmesser ansetzen zu können. Zur Ansteuerung des Schweißroboters kann beispielsweise auf ein Datenbankmodell zurückgegriffen werden, das Prozessparameter bereitstellt, um Parameter, wie beispielsweise die Materiallegierung, die Materialtemperatur, die Materialabmessungen oder dergleichen, berücksichtigen zu können.

Gemäß einer weiteren vorteilhaften Ausgestaltung wird während der Durchführung des Reibschweißverfahrens zumindest der Bandendabschnitt automatisiert radial gegen die benachbarte Bandwicklung gepresst. Hierdurch können lose Bandwicklungen des Coils in paarweisen Kontakt miteinander gebracht werden, was die Wickelqualität des Coils verbessert und gleichzeitig einen besseren Kontakt zwischen dem Bandendabschnitt und der benachbart dazu angeordneten Bandwicklung erzeugt. Letzteres schafft eine höhere Sicherheit des erfindungsgemäßen Verfahrens hinsichtlich der Herstellung einer hochqualitativen Reibschweißverbindung. Um den Bandendabschnitt automatisiert radial nach außen gegen die benachbarte Bandwicklung pressen zu können, kann beispielsweise ein, beispielsweise spreizbarer, kegelförmiger Dorn in das innere Coilauge eigeführt werden. Um den Bandendenabschnitt automatisiert radial nach innen gegen die benachbarte Bandwicklung pressen zu können, kann beispielsweise eine abgeflachte Andrückfläche gegen den äußeren Coildurchmesser gedrückt werden.

Gemäß einer weiteren vorteilhaften Ausgestaltung wird vor der Durchführung des Reibschweißverfahrens eine Position und/oder eine Formgebung des Bandendabschnitts automatisiert erfasst. Die erfasste Position des Bandendabschnitts relativ zu dem Reibschweißgerät des Schweißroboters und/oder die Formgebung des Bandendabschnitts kann beim Betrieb des Schweißroboters berücksichtigt werden, um wenigstens einen Schweißpunkt/-naht an einer optimalen Position des Bandendabschnitts setzen zu können.

Gemäß einer weiteren vorteilhaften Ausgestaltung wird vor der Durchführung des Reibschweißverfahrens ein innerhalb eines inneren Coilauges des Coils für ein darin einführbares Reibschweißgerät des Schweißroboters zur Verfügung stehender Raum automatisiert erfasst. Diese Prüfung kann auch als Plausibilitätsabfrage bezeichnet werden und wird vor dem Start des Schweißvorgangs durchgeführt. Hierdurch wird vermieden, dass das Reibschweißgerät mit dem Coil kollidiert, wenn in dem Coilauge kein ausreichender Raum für das Reibschweißgerät zur Verfügung steht. Dies vermeidet einen Schaden an dem Coil und an dem Reibschweißgerät. Die Information, ob ein innerhalb des Coilauges für ein darin einzuführendes Reibschweißgerät des Schweißroboters zur Verfügung stehender Raum zur Einführung des Reibschweißgeräts ausreichend ist oder nicht, kann beim Betrieb des Schweißroboters berücksichtigt werden.

Gemäß einer weiteren vorteilhaften Ausgestaltung wird das Reibschweißgerät während der Durchführung des Reibschweißverfahrens automatisiert an dem Coil abgestützt. Hierdurch kann ein das Reibschweißgerät haltender Roboterarm des Schweißroboters während der Durchführung des Reibschweißverfahrens entlastet werden. Zudem kann durch die Abstützung eine ausreichende Reibschweißkraft gewährleistet werden. Das Reibschweißgerät kann beispielsweise radial außen an dem Coil oder innerhalb des inneren Coilauges des Coils abgestützt werden. Eine erfindungsgemäße Vorrichtung zum Fixieren eines Bandendabschnitts eines zu einem Coil aufgewickelten Metallbands an einer benachbart zu dem Bandendabschnitt angeordneten Bandwicklung des Coils ist im Anspruch 9 definiert und weist ebenfalls ein Reibschweißgerät auf. Bei dem Reibschweißgerät handelt es sich um ein Reibpunktschweißgerät oder ein Reibrührschweißgerät. In einer bevorzugten Ausführungsform ist die Haltevorrichtung als Schweißroboter ausgeführt.

Mit der Vorrichtung sind die oben mit Bezug auf das Verfahren genannten Vorteile entsprechend verbunden. Insbesondere kann das Verfahren gemäß einer der oben genannten Ausgestaltung oder einer Kombination von wenigstens zwei dieser Ausgestaltungen miteinander unter Verwendung der erfindungsgemäßen Vorrichtung durchgeführt werden. Die Vorrichtung kann wenigstens eine Ansteuerelektronik zum Ansteuern des Schweißroboters/der Haltevorrichtung aufweisen. Des Weiteren kann die Vorrichtung wenigstens eine mit der Ansteuerelektronik verbundene Sensorik aufweisen, wobei die Ansteuerelektronik eingerichtet sein kann, den Schweißroboter/die Haltevorrichtung unter Berücksichtigung von Messwerten der Sensorik anzusteuern.

Gemäß einer weiteren vorteilhaften Ausgestaltung weist der Schweißroboter/Haltevorrichtung wenigstens eine Sensoreinheit zum Erfassen einer Position und/oder einer Formgebung des Bandendabschnitts und/oder zum Erfassen eines innerhalb eines inneren Coilauges des Coils für das darin einführbare Reibschweißgerät zur Verfügung stehender Raums auf. Mit diesen Ausgestaltungen sind die oben mit Bezug auf die entsprechenden Ausgestaltungen des Verfahrens genannten Ausgestaltungen entsprechend verbunden. Die Sensoreinheit kann beispielsweise eine optische Sensoreinheit sein.

Gemäß einer weiteren vorteilhaften Ausgestaltung weist der Schweißroboter/die Haltvorrichtung wenigstens eine Schutzeinheit zum äußeren Schutz des Reibschweißgeräts und/oder wenigstens eine Kühleinheit zum Kühlen des Reibschweißgeräts auf. Die Schutzeinheit kann das Reibschweißgerät vor mechanischen Einflüssen schützen und hierzu das Reibschweißgerät teilweise umgeben. Die Kühleinheit kann eine aktive Kühleinheit mit einem Kühlkreislauf sein.

Im Folgenden wird die Erfindung unter Bezugnahme auf die anliegenden Figuren anhand bevorzugter Ausführungsformen beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigen:
- Figur 1:: ein Ablaufdiagramm eines Ausführungsbeispiels für ein erfindungsgemäßes Verfahren;
- Figur 2:: eine schematische Seitenansicht von drei verschiedenen Coils mit nicht fixiertem inneren Bandendabschnitt, beziehungsweise äußeren Bandendabschnitt;
- Figur 3:: eine schematische Seitenansicht eines Ausführungsbeispiels für eine erfindungsgemäße Vorrichtung;
- Figur 4:: eine schematische Draufsicht der in Figur 3 gezeigten Vorrichtung; und
- Figur 5:: eine schematische Schnittdarstellung eines weiteren Ausführungsbeispiels für eine erfindungsgemäße Vorrichtung.

In den Figuren sind gleiche bzw. funktionsgleiche Bauteile mit denselben Bezugszeichen versehen. Eine wiederholte Beschreibung dieser Bauteile kann weggelassen sein.

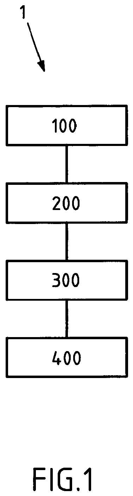

Figur 1 zeigt ein Ablaufdiagramm eines Ausführungsbeispiels für ein erfindungsgemäßes Verfahren 1 zum Fixieren eines in einem nicht gezeigten inneren Coilauge liegenden, nicht gezeigten Bandendabschnitts eines zu einem nicht gezeigten Coil mit dem Coilauge aufgewickelten, nicht gezeigten Metallbands an einer benachbart zu dem Bandendabschnitt angeordneten, nicht gezeigten Bandwicklung des Coils. Zur Durchführung des Verfahrens 1 kann eine nicht gezeigte erfindungsgemäße Vorrichtung eingesetzt werden.

In Verfahrensschritt 100 wird das Coil von einem nicht gezeigten Haspeldorn abgezogen und auf einem nicht gezeigten Rollentisch abgelegt, wozu beispielsweise ein Kran, ein Bundhubwagen oder dergleichen eingesetzt werden kann. Zudem kann das Coil in Verfahrensschritt 100 mittels eines Bundhubwagens oder dergleichen zu einem Ort transportiert werden, an dem die Fixierung des Bandendabschnitts unter Durchführung eines Reibschweißverfahrens mittels eines Schweißroboters durchgeführt werden soll bzw. an dem der Bandendabschnitt durch das Reibschweißverfahren stoffschlüssig an der Bandwicklung fixiert werden soll.

In Verfahrensschritt 200 wird eine Position und/oder eine Formgebung des Bandendabschnitts automatisiert mittels wenigstens einer nicht gezeigten Sensoreinheit erfasst. Des Weiteren wird in Verfahrensschritt 200 erfasst, ob ein innerhalb des Coilauges für ein darin einführbares, nicht gezeigtes Reibschweißgerät des Schweißroboters zur Verfügung stehender Raum zu diesem Einführen ausreichend ist oder nicht.

Ist der in Verfahrensschritt 200 erfasste Raum ausreichend zum Einführen des Reibschweißgeräts in das Coilauge, wird das Reibschweißgerät in Verfahrensschritt 300 in das Coilauge eingeführt.

In Verfahrensschritt 400 wird anschließend das Reibschweißverfahren durchgeführt. In Verfahrensschritt 400 kann während der Durchführung des Reibschweißverfahrens zumindest der Bandendabschnitt automatisiert radial nach außen gegen die benachbarte Bandwicklung gepresst werden. Zudem kann in Verfahrensschritt 400 das Reibschweißgerät während der Durchführung des Reibschweißverfahrens automatisiert innerhalb des Coilauges abgestützt werden. Im Verfahrensabschnitt 400 wird alternativ oder zusätzlich das Reibschweißgerät von außen gegen die Coiloberfläche abgestützt, um den äußeren Bandendabschnitt gegen die Coiloberfläche und die benachbarte Bandwicklung zu pressen.

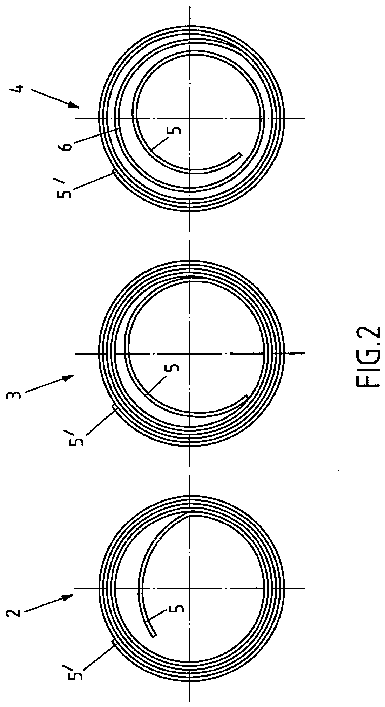

Figur 2 zeigt eine schematische Seitenansicht von drei verschiedenen Coils 2, 3 und 4 mit nicht fixiertem inneren Bandendabschnitt 5. Hierdurch kann der innere Bandendabschnitt 5 lokal kollabieren bzw. abknicken, wie es links in Figur 2 gezeigt ist. Des Weiteren kann der innere Bandendabschnitt 5 insgesamt kollabieren bzw. sich nach innen krümmen, wie es in der Mitte von Figur 2 gezeigt ist. Auch kann an der Coilaußenseite ein äußerer Bandendabschnitt 5 abstehen, wie es an Coil 3 gezeigt ist. Auch können zusätzlich zu dem inneren Bandendabschnitt 5 weitere Bandwicklungen 6 kollabieren bzw. sich krümmen, wie es rechts in Figur 2 gezeigt ist.

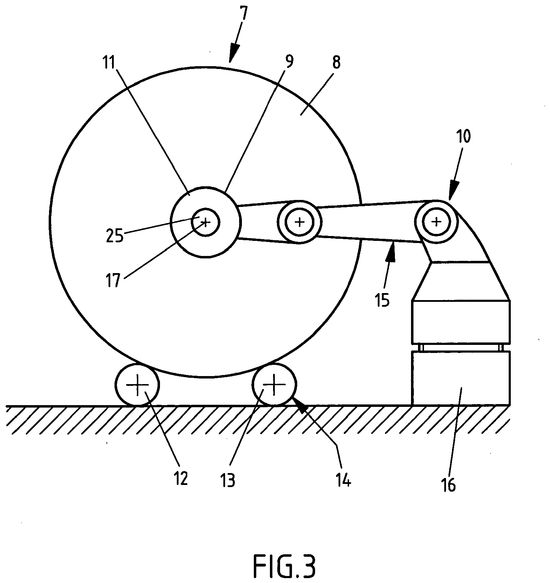

Figur 3 zeigt eine schematische Seitenansicht eines Ausführungsbeispiels für eine erfindungsgemäße Vorrichtung 7 zum Fixieren eines nicht gezeigten inneren Bandendabschnitts eines zu einem Coil 8 aufgewickelten, nicht gezeigten Metallbands an einer benachbart zu dem Bandendabschnitt angeordneten, nicht gezeigten Bandwicklung des Coils 8. Das Coil 8 weist ein inneres Coilauge 9 auf. Die Vorrichtung 7 weist eine durch zwei Rollen 12 und 13 gebildete Ablage 14 auf, auf die das Coil 8 aufgelegt ist.

Die Vorrichtung 7 weist einen Schweißroboter 10 zum stoffschlüssigen Verbinden des Bandendabschnitts an der Bandwicklung auf. Hierzu weist der Schweißroboter 10 ein Reibschweißgerät 11 auf. Zudem weist der Schweißroboter 10 einen das Reibschweißgerät 11 haltenden, vorzugsweise mehrgliedrig ausgebildeten Roboterarm 15 auf. Darüber hinaus weist der Schweißroboter 10 eine ortsfeste Linearführung 16 auf, an der der Roboterarm 15 verlagerbar angeordnet ist, um parallel zu einer senkrecht auf der Zeichenebene von Figur 3 stehende Längsachse 17 des Coils 8 verlagerbar zu sein.

Der Schweißroboter 10 weist zudem eine Sensoreinheit 25 zum Erfassen einer Position und/oder einer Formgebung des Bandendabschnitts und/oder zum Erfassen eines innerhalb des Coilauges des Coils für das darin einzuführende Reibschweißgerät 11 zur Verfügung stehenden Raums auf. Zudem weist der Schweißroboter 10 eine nicht gezeigte Schutzeinheit zum äußeren Schutz des Reibschweißgeräts 11 und/oder wenigstens eine nicht gezeigte Kühleinheit zum Kühlen des Reibschweißgeräts 11 auf. Ferner weist der Schweißroboter 10 eine Stützeinheit 26 zum automatisierten Abstützen des Reibschweißgeräts 11 an dem Coil 8 auf.

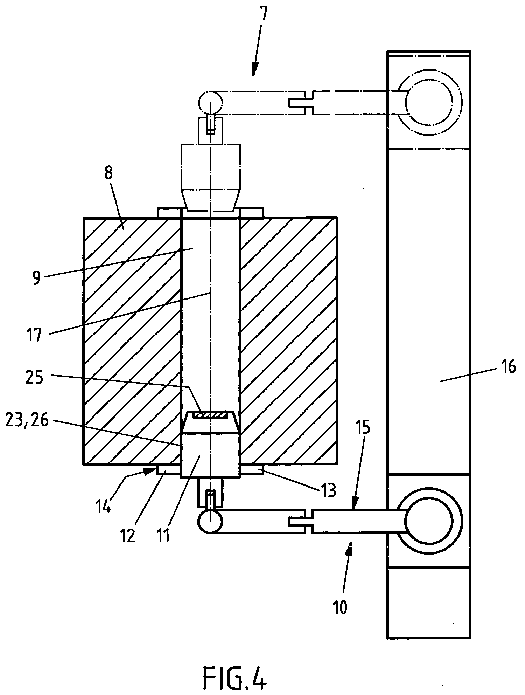

Figur 4 zeigt eine schematische Draufsicht der in Figur 3 gezeigten Vorrichtung 7. Die Vorrichtung 7 ist in zwei verschiedenen Stellungen gezeigt. In der durch durchgezogene Linien gezeigten Stellung ist das Reibschweißgerät 11 in ein Ende des Coilauges 9 eingeführt, während es in der mit den gestrichelten Linien gezeigten Stellung vor das andere Ende des Coilauges 9 positioniert ist, um den in Figur 4 nicht gezeigten inneren Bandendabschnitt des Coils 8 an beiden Enden des Coilauges 9 fixieren zu können.

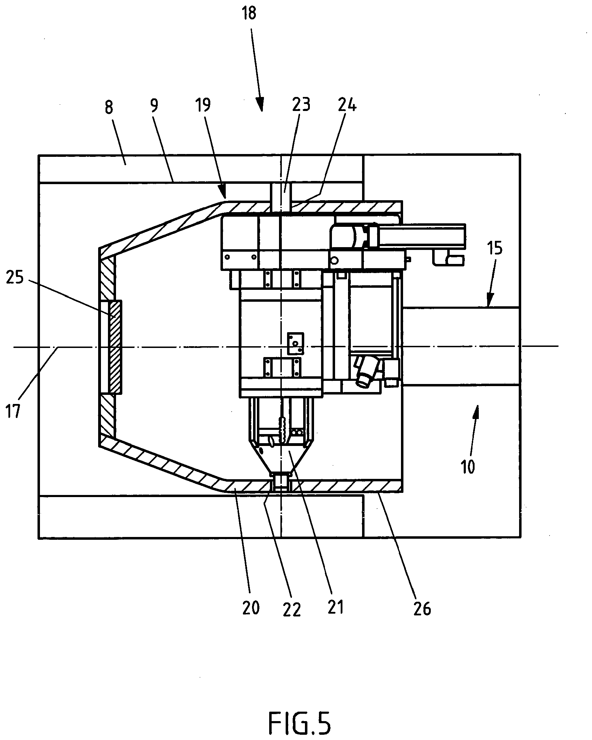

Figur 5 zeigt eine schematische Schnittdarstellung eines weiteren Ausführungsbeispiels für eine erfindungsgemäße Vorrichtung 18 zum Fixieren eines nicht gezeigten inneren Bandendabschnitts eines zu einem Coil 8 aufgewickelten, nicht gezeigten Metallbands an einer benachbart zu dem Bandendabschnitt angeordneten, nicht gezeigten Bandwicklung des Coils 8. Die Vorrichtung 18 kann im Übrigen entsprechend dem in den Figuren 3 und 4 gezeigten Ausführungsbeispiel ausgebildet sein.

Das Reibschweißgerät 19 der Vorrichtung 18 weist ein Gehäuse 20 auf, das an einer Einführseite konisch verjüngt ist, um das Einführen des Reibschweißgeräts 19 in das Coilauge 9 des Coils 8 zu erleichtern. An diesem Gehäuse befindet sich zusätzlich die Sensoreinheit 25 und die Stützeinheit 26 zum automatisierten Abstützen auf dem Coilaußendurchmesser. Das Reibschweißgerät 19 weist zudem eine Reibschweißeinheit 21 auf, die durch eine Öffnung 22 in dem Gehäuse 20 hindurch einen Reibpunktschweißvorgang oder einen Reibrührschweißvorgang durchführen kann. Zudem weist das Reibschweißgerät 21 eine Stützeinheit 23 zum automatisierten Abstützen des Reibschweißgeräts 19 an dem Coil 8 auf, die durch eine weitere Öffnung 24 des Gehäuses 20 hindurch in Kontakt mit dem Coils 8 bringbar ist.

### Bezugszeichenliste

- 1: Verfahren
- 2: Coil
- 3: Coil
- 4: Coil
- 5: Bandendabschnitt
- 5': Bandendabschnitt
- 6: Bandwicklung
- 7: Vorrichtung
- 8: Coil
- 9: Coilauge
- 10: Haltevorrichtung/(Schweiß-)roboter
- 11: Reibschweißgerät
- 12: Rolle
- 13: Rolle
- 14: Ablage
- 15: Roboterarm
- 16: Linearführung
- 17: Längsachse von 8
- 18: Vorrichtung
- 19: Reibschweißgerät
- 20: Gehäuse von 19
- 21: Reibschweißeinheit
- 22: Öffnung an 20
- 23: Stützeinheit von 19
- 24: Öffnung an 20
- 25: Sensoreinheit
- 26: Stützeinheit von 19
- 100: Verfahrensschritt
- 200: Verfahrensschritt
- 300: Verfahrensschritt
- 400: Verfahrensschritt

## Patentansprüche

1. Verfahren (1) zum Fixieren eines Bandendabschnitts (5, 5') eines zu einem Coil (2, 3, 4, 8) aufgewickelten Metallbands an einer benachbart zu dem Bandendabschnitt (5, 5') angeordneten Bandwicklung (6) des Coils (2, 3, 4, 8),
**dadurch gekennzeichnet,**
**dass** der Bandendabschnitt (5, 5') durch ein Reibschweißverfahren stoffschlüssig an der Bandwicklung (6) fixiert wird.

2. Verfahren (1) nach Anspruch 1,
**dadurch gekennzeichnet,**
**dass** das Reibschweißverfahren ein Reibpunktschweißverfahren ist.

3. Verfahren nach Anspruch 1,
**dadurch gekennzeichnet,**
**dass** das Reibschweißverfahren ein Reibrührschweißverfahren ist.

4. Verfahren (1) nach einem der vorangegangenen Ansprüche,
**dadurch gekennzeichnet,**
**dass** das Reibschweißverfahren mittels eines Schweißroboters (10) durchgeführt wird.

5. Verfahren (1) nach einem der vorangegangenen Ansprüche,
**dadurch gekennzeichnet,**
**dass** während der Durchführung des Reibpunktschweißverfahrens zumindest der Bandendabschnitt (5, 5') automatisiert radial nach außen und/oder innen gegen die benachbarte Bandwicklung (6) gepresst wird.

6. Verfahren (1) nach einem der vorangegangenen Ansprüche,
**dadurch gekennzeichnet,**
**dass** vor der Durchführung des Reibschweißverfahrens eine Position und/oder eine Formgebung des Bandendabschnitts (5, 5') automatisiert erfasst wird.

7. Verfahren (1) nach Anspruch 4 bis 6,
**dadurch gekennzeichnet,**
**dass** vor der Durchführung des Reibschweißverfahrens ein innerhalb eines Coilauges (9) des Coils (8) für ein darin einführbares Reibschweißgerät (11, 19) des Schweißroboters (10) zur Verfügung stehender Raum automatisiert erfasst wird.

8. Verfahren (1) nach Anspruch 7,
**dadurch gekennzeichnet,**
**dass** das Reibschweißgerät (11, 19) während der Durchführung des Reibschweißverfahrens automatisiert an dem Coil (2, 3, 4, 8) abgestützt wird.

9. Vorrichtung (18) zum Fixieren eines Bandendabschnitts (5, 5') eines zu einem Coil (2, 3, 4, 8) aufgewickelten Metallbands an einer benachbart zu dem Bandendabschnitt (5, 5') angeordneten Bandwicklung (6) des Coils (2, 3, 4, 8), aufweisend eine Haltevorrichtung (10); wobei die Haltevorrichtung (10) wenigstens ein in ein Ende eines Coilauges (9) des Coils (2, 3, 4, 8) einführbares Schweißgerät (19) zum stoffschlüssigen Verbinden des Bandendabschnitts (5, 5') mit der Bandwicklung (6) und wenigstens eine Stützeinheit (23) zum automatisierten Abstützen des Schweißgeräts (19) innerhalb des Coilauges (9) aufweist, wobei das Schweißgerät (19) ein Gehäuse (20) mit einer Öffnung (24) aufweist und die Stützeinheit (23) durch die Öffnung (24) hindurch in Kontakt mit dem Coil (2, 3, 4, 8) bringbar ist, **dadurch gekennzeichnet, dass** das Schweißgerät ein Reibschweißgerät ist.

10. Vorrichtung (18) nach Anspruch 9,
**dadurch gekennzeichnet,**
**dass** die Haltevorrichtung (10) als Schweißroboter ausgeführt ist.

11. Vorrichtung (18) nach Anspruch 9 oder 10,
**dadurch gekennzeichnet,**
**dass** die Haltevorrichtung (10) wenigstens eine Sensoreinheit (25) zum Erfassen einer Position und/oder einer Formgebung des Bandendabschnitts (5, 5') und/oder zum Erfassen eines innerhalb des Auges (9) des Coils (8) zur Verfügung stehenden Raums für das darin einführbare Reibschweißgerät (19) umfasst.

12. Vorrichtung (18) nach einem der Ansprüche 9 bis 11,
**dadurch gekennzeichnet,**
**dass** die Haltevorrichtung (10) wenigstens eine Schutzeinheit zum äußeren Schutz des Reibschweißgeräts (19) aufweist.

13. Vorrichtung (18) nach einem der Ansprüche 9 bis 12,
**dadurch gekennzeichnet,**
**dass** die Haltevorrichtung (10) wenigstens eine Kühleinheit zum Kühlen des Reibschweißgeräts (19) aufweist.

14. Vorrichtung (18) nach einem der Ansprüche 9 bis 13,
**dadurch gekennzeichnet,**
**dass** es sich bei dem Reibschweißgerät (19) um ein Reibrührschweißgerät oder um ein Reibpunktschweißgerät handelt.

## Claims

1. Method (1) for fixing a strip end section (5, 5') of a metal strip, which is wound to form a coil (2, 3, 4, 8), to a strip winding (6), which is arranged adjacent to the strip end section (5, 5') of the coil (2, 3, 4, 8), **characterised in that** the strip end section (5, 5') is fixed by material bonding to the strip winding (6) by a friction welding method.

2. Method (1) according to claim 1, **characterised in that** the friction welding method is a friction spot-welding method.

3. Method according to claim 1, **characterised in that** the friction welding method is a friction stir-welding method.

4. Method (1) according to any one of the preceding claims, **characterised in that** the friction welding method is carried out by means of a welding robot (10).

5. Method (1) according to any one of the preceding claims, **characterised in that** while the friction spot-welding method is being carried out at least the strip end section (5, 5') is automatically pressed radially outwardly and/or inwardly against the adjacent strip winding (6).

6. Method (1) according to any one of the preceding claims, **characterised in that** a position and/or a shape of the strip end section (5, 5') is or are automatically detected before the friction welding method is carried out.

7. Method (1) according to any one of claims 4 to 6, **characterised in that** before the friction welding method is carried out a space available within a coil eye (9) of the coil (8) for friction welding apparatus (11, 19), which is insertable thereinto, of the welding robot (10) is automatically detected.

8. Method (1) according to claim 7, **characterised in that** the friction welding device is automatically supported on the coil (2, 3, 4, 8) while the friction welding method is being carried out.

9. Device (18) for fixing a strip end section (5, 5') of a metal strip wound into a coil (2, 3, 4, 8) to a strip winding (6), which is arranged adjacent to the strip end section (5, 5'), of the coil (2, 3, 4, 8), comprising a holding device; wherein the holding device (10) comprises at least one friction welding apparatus (19) insertable into an end of a coil eye (9) of the coil (2, 3, 4, 8) for materially-bonded connection of the strip end section (5, 5') with the strip winding (6) and at least one support unit (23) for automatically supporting the friction welding apparatus (19) within the coil eye (9), wherein the friction welding apparatus (19) comprises a housing (20) with an opening (24) and the support unit (23) can be brought into contact with the coil (2, 3, 4, 8) through the opening (24), **characterised in that** the welding apparatus is friction welding apparatus.

10. Device (18) according to claim 9, **characterised in that** the holding device (10) is configured as a welding robot.

11. Device (18) according to claim 9 or 10, **characterised in that** the holding device (10) comprises at least one sensor unit (25) for detecting a position and/or a shape of the strip end section (5, 5') and/or for detecting a space available within the eye (19) of the coil (8) for the friction welding apparatus (19) insertable thereinto.

12. Device (18) according to any one of claims 9 to 11, **characterised in that** the holding device (10) comprises at least one protective unit for externally protecting the friction welding apparatus (19).

13. Device (18) according to any one of claims 9 to 12, **characterised in that** the holding device (10) comprises at least one cooling unit for cooling the friction welding apparatus (19).

14. Device (18) according to any one of claims 9 to 13, **characterised in that** the friction welding apparatus (19) is friction stir-welding apparatus or friction spot-welding apparatus.

## Revendications

1. Procédé (1) de fixation d'une section d'extrémité de bande (5, 5') d'une bande métallique enroulée en une bobine (2, 3, 4, 8) sur un enroulement de bande (6) de la bobine (2, 3, 4, 8) disposé à proximité de la section d'extrémité de bande (5, 5'),
**caractérisé en ce que**
la section d'extrémité de bande (5, 5') est fixée par liaison de matière à l'enroulement de bande (6) par un procédé de soudage par friction.

2. Procédé (1) selon la revendication 1,
**caractérisé en ce que**
le procédé de soudage est par points par friction.

3. Procédé (1) selon la revendication 1,
**caractérisé en ce que**
le soudage par friction est un procédé de soudage par friction-malaxage.

4. Procédé (1) selon l'une des revendications précédentes,
**caractérisé en ce que** le procédé de soudage par friction est réalisé au moyen d'un robot de soudage (10).

5. Procédé (1) selon l'une des revendications précédentes,
**caractérisé en ce que** pendant l'exécution du procédé de soudage par points par friction, au moins la section d'extrémité de bande (5, 5') est pressée de manière automatisée radialement vers l'extérieur et/ou vers l'intérieur contre l'enroulement de bande (6) adjacent.

6. Procédé (1) selon l'une des revendications précédentes,
**caractérisé en ce que**, avant de procéder à l'exécution du procédé de soudage par friction, une position et/ou un façonnage de la section d'extrémité de bande (5, 5') sont détectés de manière automatisée.

7. Procédé (1) selon les revendications 4 à 6,
**caractérisé en ce que** qu'avant l'exécution du procédé de soudage par friction, un espace disponible à l'intérieur d'un oeil de bobine (9) de la bobine (8) pour un appareil de soudage par friction (11, 19) du robot de soudage (10) pouvant y être introduit est détecté de manière automatisée.

8. Procédé (1) selon la revendication 7,
**caractérisé en ce que** l'appareil de soudage par friction (11, 19) est supporté de manière automatisée sur la bobine (2, 3, 4, 8) pendant l'exécution du procédé de soudage par friction.

9. Dispositif (18) de fixation d'une section d'extrémité de bande (5, 5') d'une bande métallique enroulée en une bobine (2, 3, 4, 8) sur un enroulement de bande (6) de la bobine (2, 3, 4, 8) disposé à proximité de la section d'extrémité de bande (5, 5'), comprenant un dispositif de maintien (10) ;
dans lequel le dispositif de maintien (10) comprend au moins un appareil de soudage (19) pouvant être introduit dans une extrémité d'un oeil de bobine (9) de la bobine (2, 3, 4, 8) pour relier par liaison de matière la section d'extrémité de bande (5, 5') à l'enroulement de bande (6) et au moins une unité de support (23) pour soutenir de manière automatisée l'appareil de soudage (19) à l'intérieur de l'oeil de bobine (9), l'appareil de soudage (19) présentant un boîtier (20) avec une ouverture (24) et l'unité de support (23) pouvant être amenée en contact avec la bobine (2, 3, 4, 8) à travers l'ouverture (24),
**caractérisé en ce que** l'appareil de soudage est un appareil de soudage par friction.

10. Dispositif (18) selon la revendication 9,
**caractérisé en ce que**
le dispositif de maintien (10) est réalisé sous forme de robot de soudage.

11. Dispositif (18) selon la revendication 9 ou 10,
**caractérisé en ce que**
le dispositif de maintien (10) comprend au moins une unité de détection (25) pour détecter une position et/ou un façonnage de la section d'extrémité de bande (5, 5') et/ou pour détecter un espace disponible à l'intérieur de l'oeil (9) de la bobine (8) pour l'appareil de soudage par friction (19) pouvant y être inséré.

12. Dispositif (18) selon l'une quelconque des revendications 9 à 11,
**caractérisé en ce que**
le dispositif de maintien (10) comporte au moins une unité de protection pour la protection extérieure de l'appareil de soudage par friction (19).

13. Dispositif (18) selon l'une quelconque des revendications 9 à 12,
**caractérisé en ce que**
le dispositif de maintien (10) comporte au moins une unité de refroidissement servant à refroidir l'appareil de soudage par friction (19).

14. Dispositif (18) selon l'une quelconque des revendications 9 à 13,
**caractérisé en ce que**
l'appareil de soudage par friction (19) est un appareil de soudage par friction-malaxage ou un appareil de soudage par points par friction.
